# EUROPEAN PATENT APPLICATION

(11) **EP 3 979 159 A1**
(43) Date of publication of application: **06.04.2022**
(21) Application number: 20199334.2
(22) Date of filing: 30.09.2020
(51) Int. Cl.: G06Q 10/06, G06Q 10/08, G06Q 50/04

(54) **METHOD, DEVICE AND SYSTEM FOR DYNAMICALLY CONFIGURING A MANUFACTURING PROCESS**

(71) Applicant: Siemens Aktiengesellschaft, 80333 München (DE)
(72) Inventor: Agarwal, Shubham, 560076 Bangalore, Karnataka (IN); Chandra, Avinash, 560037 Bangalore, Karnataka (IN); Ghali, Onkaresh, 560010 Bangalore, Karnataka (IN); Hegde, Shreeharsha, 560040 Bangalore, Karnataka (IN); Hufnagel, Hans-Juergen, 90613 Grosshabersdorf (DE); Magaji, Meghana, 560019 Bangalore, Karnataka (IN); R, Vinodh Kumar, 560068 Bangalore, Karnataka (IN); Reedhima, G, 560099 Bangalore, Karnataka (IN); Upadhyaya, Prasad S, 560011 Bangalore, Karnataka (IN)
(74) Representative: Isarpatent

(57) **Abstract**

The present invention provides a method (300), device (101) and system (100) for dynamically configuring a product manufacturing process. In one aspect, the method (300) includes identifying a type of the product to be manufactured. Additionally, the method includes determining one or more components (112A-N, 114A-N, 116A-N) logically required to manufacture the product based on the type of the product to be manufactured. The method (300) further includes determining a real-time location of the one or more components (112A-N, 114AN, 116A-N) logically required to manufacture the product in a geographical area. Furthermore, the method (300) includes configuring the product manufacturing process based on the real-time location of the one or more components (112A-N, 114A-N, 116A-N).

## Description

The present invention relates to managing a manufacturing process. In particular, the present invention relates to dynamically configuring a manufacturing process.

A manufacturing facility may include a huge geographical area and may include multiple assets, components and resource setups. Therefore, it is essential that the resources and assets are distributed optimally across the manufacturing facility. Additionally, traditional manufacturing facilities may have products manufactured in low volumes and may require manual intervention in the manufacturing process. In such cases, if even a single component involved in the manufacturing process is missing or unavailable, the entire manufacturing process is delayed and may result in a bottleneck. Therefore, a manual analysis is required to be performed to introduce transparency in the assets availability within the manufacturing facility. However, due to the geographical size of the manufacturing facilities, it is practically impossible to manually keep a track of all the assets that may be present in the manufacturing facility. Additionally, a lack of transparency in the asset management process can result in difficulty in visualizing the entire manufacturing process in an efficient manner thereby resulting in delays in the producing the deliverables.

Currently, the assets and/or components in a manufacturing facility is traced using sensors which may provide a static location of the asset/component. However, there is no way of determining multiple components which may be logically required to manufacture the product. Additionally, the manufacturing facilities may have virtual perimeters to identify the presence of the assets/components in the facility. However, such perimeters are not dynamic and are mostly static in nature. Therefore, any change in the geographical area of the manufacturing facility cannot be dynamically traced.

In light of the above, there is a need for a method, device and system for dynamically configuring a manufacturing process in manufacturing facility.

Therefore, the object of the invention is to provide a method, device and a system for dynamically configuring a manufacturing process in manufacturing facility.

The object of the present invention is achieved by a method of dynamically configuring a product manufacturing process in a manufacturing facility. The method comprises identifying a type of product to be manufactured. The manufacturing facility may accommodate manufacturing processes of a plurality of products. Therefore, effective identification of the type of product to be manufactured is essential. The method further comprises determining one or more components logically required to manufacture the product based on the type of product to be manufactured. In an embodiment, the product to be manufactured may include multiple components. Identification of the type of product to be manufactured enables effective determination of the one or more components logically required for the manufacture of the product. The method comprises determining a real-time location of the one or more components in a geographical area of the manufacturing facility. In an embodiment, the one or more components required to manufacture the product may be located in a geographical area of the manufacturing facility. The geographical area may include a portion of the manufacturing facility. Alternatively, the geographical area may be a part of an industrial set-up, a warehouse, a technical installation or a commercial facility. The one or more components may be associated with one or more sensors that may enable determination of a real-time location associated with the one or more components. The method may further comprise providing a real-time location of the one or more components on a user device. For example, the real-time location of the one or more components may be displayed on a user interface of the user device. The real-time location of the one or more components enables a user of the manufacturing facility to optimize the product manufacturing process.

In an embodiment, the method further comprises configuring the product manufacturing process based on the real-time location of the one or more components logically required to manufacture the product. For example, the product manufacturing process may include a plurality of stages. One of the stages of the manufacturing process may include procurement of the one or more components logically required to manufacture the product of interest. Therefore, the real-time location of the one or more components may enable effective determination of a time required for the procurement of the one or more components associated with the product to be manufactured. In yet another embodiment, the real-time location of the one or more components enables determination of availability of the one or more components in the manufacturing facility. Therefore, the manufacturing process may be configured based on the availability of the one or more components in the geographical area in the manufacturing facility. Furthermore, the time taken to manufacture may also be optimized. For example, if the manufacturing process involves multiple steps, the manufacturing process may be optimized such that a set of steps in the manufacturing process may be prioritized based on the real-time location of the one or more components.

According to an embodiment, determining a real-time location of the one or more components comprises obtaining a representation of the geographical area. For example, the representation may be a map associated with the geographical area. In an embodiment, the map may be a virtual map or a digital map of the geographical area. The method comprises generating at least one virtual perimeter on at least one portion of the representation of the geographical area. The virtual perimeter may be a virtual boundary that may be dynamically defined on the representation of at least one portion of the geographical area. In an embodiment, the geographical area may include multiple virtual perimeters. The virtual perimeter may enable identification of movement of the one or more components, i.e. entering and exiting of the one or more components from the virtual boundary on the representation of the geographical area. The method comprises determining the real-time location of the one or more components based on the virtual perimeter. In an embodiment, each of the one or more components are associated with a sensor which enables location tracking of the components. For example, the sensor may include a transponder device associated with the components. Advantageously, the method enables effective identification of the real-time location associated with the one or more components logically required to manufacture the product.

According to an embodiment, the method further comprises determining an information associated with the each of the one or more components. For example, the information may include health status of the component. The health status may indicate if the component is faulty or is functional. Additionally, the information may include a time stamp associated with the component. The time stamp may indicate the time duration for which the component has been present/existing in the geographical area. Furthermore, the information may also include a make of the one or more components. Therefore, the information associated with each of the components enables effective configuration of the manufacturing product. The method comprises providing information associated with each of the one or more components on the user device. Advantageously, the information associated with the components enables determination of quality of the components that are to be included in the manufacturing process of the product. Therefore, elimination of faulty components from the manufacturing process is made possible.

According to an embodiment, generating at least one perimeter in the at least one portion of the geographical area comprises determining a presence of at least one physical perimeter in the geographical area. In an embodiment, the virtual perimeter may be defined based on the physical perimeter defined in the geographical area. The physical perimeter may be defined by one or more sensors that may be distributed in the geographical area. The one or more sensors may be configured to capture locational information associated with the geographical area. The method comprises mapping the at least one physical perimeter on the representation of the geographical area and generating the virtual perimeter on the representation of the geographical area based on the mapping. Therefore, the virtual perimeter is a representation of the physical perimeter on the representation of the geographical area. Advantageously, the perimeter enables determination of the components entering or exiting the geographical area defined by the perimeter.

According to another embodiment, identifying the one or more components logically required to manufacture the product comprises determining a plurality of components associated with the product to be manufactured. The plurality of components may logically form a part of the product to be manufactured. The method comprises determining a logic associated with the manufacturing of the product. In an embodiment, the logic or the logical requirement may be defined based on the components that are required for a normal and effective functioning of the product to be manufactured, once the product has been manufactured. Alternatively, the logical requirement may also be defined based on an order in which the components are to be assembled to manufacture the product. For example, the product to be manufactured may have components at several layers. The components to be included in the innermost layer of the product are to be logically determined first in comparison to the components to be included in the outermost layer of the product. Therefore, at different stages of manufacturing, the requirement of the components associated with the product may vary. The method comprises identifying the one or more components from the plurality of components based on the logic. Advantageously, the configuration of the manufacturing process may be effectively performed based on the logic associated with the manufacturing of the product. Additionally, based on the stage of manufacturing, the components associated with the manufacturing process may be procured or sourced.

The object of the present invention is achieved by a device for dynamically configuring a product manufacturing process. The device comprises one or more processing units, and a memory coupled to the one or more processing units. The memory comprising a configuration module configured to perform the method steps as described above.

The object of the present invention is achieved by a system for dynamically configuring a manufacturing process. The system comprises one or more servers and one or more sensors communicatively coupled to the one or more servers. The one or more sensors are configured to capture a location information associated with one or more components present in a geographical area. The processing units comprises computer-readable instructions, which when executed by the processing units cause the processing units to perform the method as described above.

The object of the present invention is achieved by a computer program product comprising a computer program, the computer program being loadable into a storage unit of a computer system, including program code sections to make the computer system execute the method described above when the computer program is executed in the computer system.

The object of the present invention is achieved by a non-transitory computer-readable medium, on which program code sections of a computer program are saved, the program code sections being loadable into and/or executable in a computer system to make the computer system execute the method as described above when the program code sections are executed in the computer system.

The present invention is further described hereinafter with reference to illustrated embodiments shown in the accompanying drawings, in which:
- FIG 1: is a block diagram of a client-server architecture which provides a geometric modeling of components representing different parts of a real-world object, according to an embodiment of the present invention.
- FIG 2: is a block diagram of a device for dynamically configuring a manufacturing process, according to an embodiment of the present invention;
- FIG 3: is a process flowchart depicting a method of dynamically configuring a manufacturing process, according to an embodiment of the present invention;
- FIG 4: is a process flowchart depicting a method of determining the real-time location of the one or more components, according to an embodiment of the present invention;
- FIG 5: is a process flowchart depicting a method of generating a virtual perimeter in a portion of the geographical area, according to an embodiment of the present invention;
- FIG 6: is a process flowchart depicting a method of identifying the components logically required to manufacture the product, according to an embodiment of the present invention; and
- FIG 7: is a exemplary embodiment of a graphical user interface depicting a real-time location tracking of the components, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

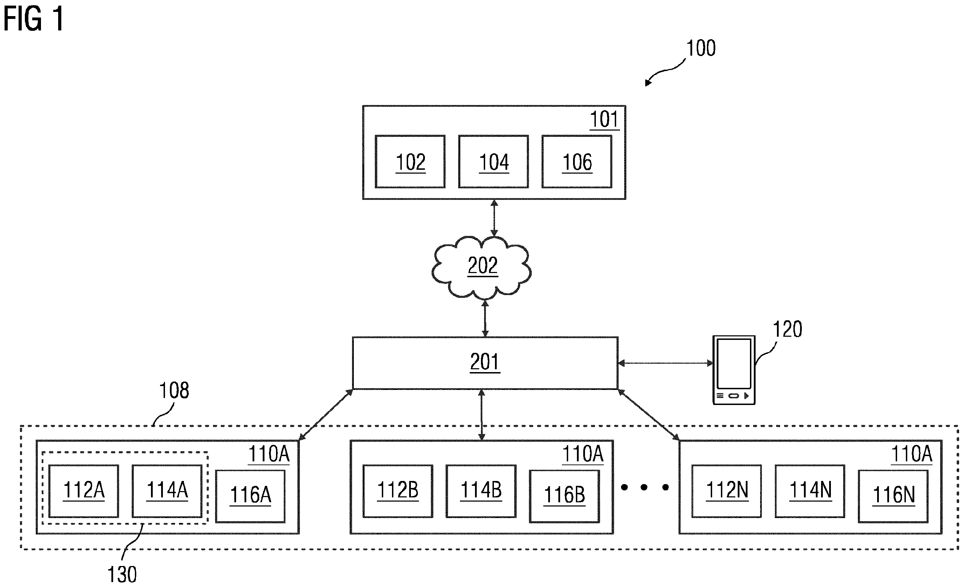

FIG 1 is an illustration of a block diagram of a client-server architecture 100 that is a geometric modelling of components representing different parts of real-world objects, according to an embodiment. The client-server architecture 100 or system 100 may include an apparatus 101 on a cloud platform which is connected to a manufacturing facility 108 through an IoT gateway 201. The IoT gateway 201 may be an edge device. The edge device 201 is connected to the apparatus 101 through a network 202. The system 100 may include one or more communication interfaces (not illustrated) for effective communication with the apparatus 101. In a further embodiment, the apparatus 101 may be connected to one or more user devices 120. The user device 120 may be a handheld device or a computing unit configured to receive one or more details of a manufacturing process and the components associated with the manufacturing process. The user device 120 may also include a user interface through which a user may input details required for effective configuration of the manufacturing process. The remote location of the apparatus 101 enables configuration of the manufacturing process in a wider geographical area encompassing a plurality of manufacturing facilities, warehouses, etc. The apparatus 101 includes a configuration module 102 configured to dynamically configure a manufacturing process in the manufacturing facility 108. The apparatus 101 further includes a database 104 configured to store information associated with components and assets 112A-N, 114A-N, 116A-N in the manufacturing facility 108. The apparatus 101 may also include a network interface 106 for communicating with one or more components of the manufacturing facility 108

The manufacturing facility 108 may include a plurality of components and assets 112A-N, 114A-N, 116A-N required for the manufacturing process. In an embodiment, the components 112AN, 114A-N, 116A-N may be placed in different geographical areas within the manufacturing facility 108. The geographical area may include a plurality of physical perimeters 110A-N. The physical perimeters 110A-N may include one or more sensors deployed in the geographical area of the manufacturing facility 108 which enable determination of entry and exit of components from the area within the physical perimeters 110AN. In an embodiment, the physical perimeters 110A-N may be a manifestation of virtual perimeters in the geographical area of the manufacturing facility 108. In a further embodiment, the geographical area within the manufacturing facility 108 may also include nested perimeters 130.

The cloud platform can be a cloud infrastructure capable of providing cloud-based services such as data storage services, data analytics services, data visualization services, etc. based on the plant data. The cloud platform can be part of public cloud or a private cloud. The cloud platform may enable data scientists/software vendors to provide software applications/firmware as a service, thereby eliminating a need for software maintenance, upgrading, and backup by the users. The software application can be full application, or software patch.

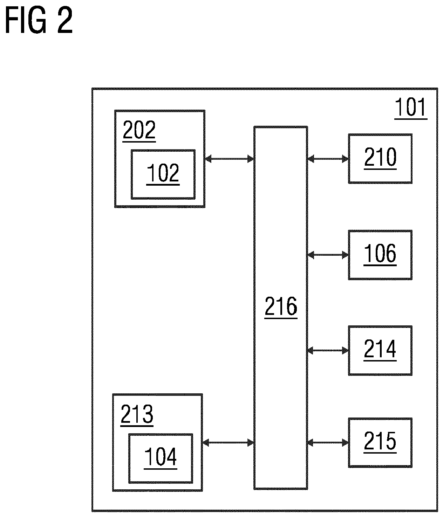

The apparatus 101 is further illustrated in greater detail in FIG 2. Referring to FIG 2, the apparatus comprises a processing unit 210, a memory 212, a storage unit 213, a network interface 106, a standard interface or bus 216, an input unit 214 and an output unit 215.

The processing unit 210, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 210 may also include embedded controllers, such as generic or programmable logic devices or arrays, application specific integrated circuits, single-chip computers, and the like. In general, a processing unit 210 can comprise hardware elements and software elements. The processing unit 210 can be configured for multithreading, i.e. the processing unit 210 can host different calculation processes at the same time, executing the either in parallel or switching between active and passive calculation processes.

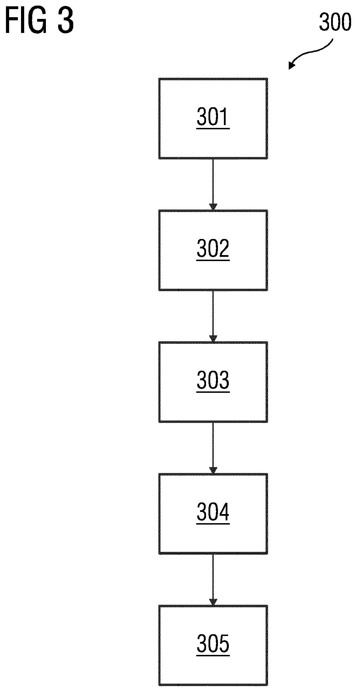

The memory 212 may be volatile memory and non-volatile memory. The memory 212 may be coupled for communication with the processing unit 210. The processing unit 210 may execute instructions and/or code stored in the memory 212. A variety of computer-readable storage media may be stored in and accessed from the memory 212. The memory 212 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 212 includes a configuration module 102 stored in the form of machine-readable instructions on any of the above-mentioned storage media and may be in communication to and executed by processing unit 210. When executed by the processing unit 210, the configuration module 102 causes the processing unit 210 to dynamically configure a manufacturing process in the manufacturing facility 108. Method steps executed by the processing unit 210 to achieve the abovementioned functionality are elaborated upon in detail in FIGs 3, 4, 5, and 6.

The storage unit 213 may be a non-transitory storage medium which stores a database 104. The technical database 104 may store data associated with the one or more components 112A-N, 114A-N, 116A-N in the manufacturing facility 108. The bus 216 acts as interconnect between the processing unit 210, the memory 212, the storage unit 213, the network interface 106, the input unit 214 and the output unit 215.

Those of ordinary skill in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

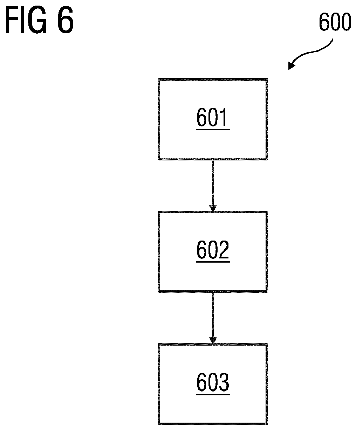

FIG 3 is a process flowchart of a method 300 of dynamically configuring a manufacturing process in a manufacturing facility 108. At step 301, the method includes identifying a type of product to be manufactured. In an embodiment, the manufacturing facility 108 may be configured for manufacturing processes of multiple products. Therefore, determining the type of product to be manufactured enables effecting configuration of the manufacturing process. At step 302, one or more components 112A-N, 114A-N, 116A-N logically required to manufacture the product is determined, based on the type of the product to be manufactured. Each type of product to be manufactured may include a different set of components to be included in the product. Therefore, based on the type of product to be manufactured the one or more components 112A-N, 114A-N, 116A-N logically required to manufacture the product are identified. The method steps of identifying the components 112A-N, 114A-N, 116A-N logically required to manufacture the product are disclosed in further detail in FIG 6. In an embodiment, data associated with the one or more components 112A-N, 114A-N, 116A-N may be stored in the database 104.

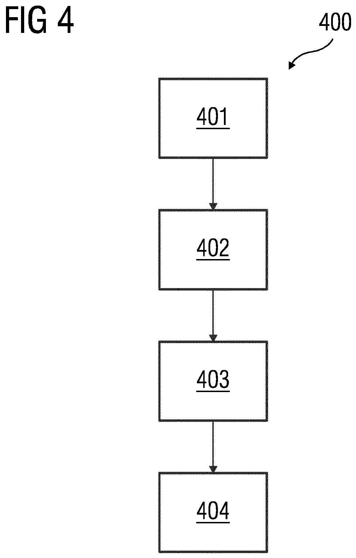

At step 303, a real-time location associated with the one or more components 112A-N, 114A-N, 116A-N is determined. In an embodiment, the one or more components 112A-N, 114A-N, 116A-N associated with the product to be manufactured may be deployed in a geographical area within the manufacturing facility 108. Alternatively, the one or more components 112A-N, 114A-N, 116A-N may be deployed in a geographical location outside of the manufacturing facility 108. In another embodiment, the one or more components 112A-N, 114A-N, 116A-N may be located in multiple locations within or external to the manufacturing facility 108. Identification of the real-time location of the one or more components 112A-N, 114A-N, 116A-N enables effective configuration of the manufacturing process. The method steps for the determination of the real-time location of the one or more components 112A-N, 114A-N, 116A-N are disclosed in further detail in FIG 4.

At step 304, an information associated with each of the one or more components 112A-N, 114A-N, 116A-N logically required to manufacture the product is determined. For example, the information may include health status of the one or more components 112A-N, 114A-N, 116A-N, a time stamp associated with the one or more components 112A-N, 114A-N, 116A-N, and/or a make of the one or more components 112A-N, 114A-N, 116A-N. The health status associated with the one or more components 112A-N, 114A-N, 116A-N enables effective identification of a working condition of the one or more components 112A-N, 114AN, 116A-N. For example, the one or more components 112A-N, 114A-N, 116A-N in the geographical area may be old and may be dysfunctional. Alternatively, the one or more components 112A-N, 114A-N, 116A-N may require further configuration for effective functioning. The health status may include one or more battery information associated with the one or more components 112A-N, 114A-N, 116A-N, functioning status of the components 112A-N, 114A-N, 116A-N, etc. The time stamp associated with the components 112A-N, 114A-N, 116A-N provides information on the time period when the components 112A-N, 114A-N, 116A-N were procured or sourced in the manufacturing facility 108. The make of the components 112A-N, 114A-N, 116A-N enables the product to tailor-manufactured as per a requirement of the user of the product.

At step 305, the product manufacturing process is configured based on the real-time location of the one or more components 112A-N, 114A-N, 116A-N. In an embodiment, the manufacturing process may include a plurality of stages. Each stage of the manufacturing process may include a different action to be performed. Therefore, based on the real-time location of the components 112A-N, 114A-N, 116A-N, the various stages of the manufacturing process may be optimized. For example, if the real-time location of the components 112A-N, 114A-N, 116A-N is away from the assembly line, the time required to source the components 112A-N, 114A-N, 116A-N to the assembly line for the manufacturing process may be high. Therefore, the other stages of the manufacturing facility may be prioritized such that a bottleneck in the manufacturing process is avoided. Hence, in the time required to source the components 112A-N, 114A-N, 116A-N to the assembly line of the manufacturing facility 108, other stages of the manufacturing process can be performed.

FIG 4 is a flowchart illustrating a method of determining the real-time location of the one or more components 112A-N, 114A-N, 116A-N, according to an embodiment of the present invention. At step 401, a representation of the geographical area is obtained. The geographical area may be an area where the manufacturing facility 108 is located and an area occupied by the manufacturing facility 108. Alternatively, the geographical area may also include area associated with the manufacturing facility 108 which may be located away from the manufacturing facility. The representation may be, for example, a map or a locational blueprint associated with the geographical area. In an embodiment, the representation may include all the details associated with the assets and components 112A-N, 114A-N, 116A-N present in the geographical area. Therefore, the representation may include locational information associated with the components 112A-N, 114A-N, 116A-N that may form a part of the manufacturing process of the product. In a further embodiment, the representation may be in virtual or digital format. Therefore, the representation may be visualized by a user of the manufacturing facility 108 on the user device 120.

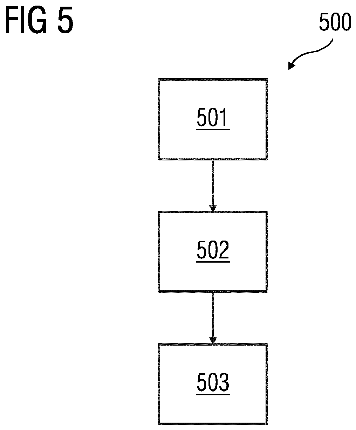

At step 402, at least one virtual perimeter 110A-N is generated on at least one portion of the representation of the geographical area. The method steps for generating the virtual perimeter 110A-N are disclosed in further detail in FIG 5. The virtual perimeter 110A-N enables identification of the one or more components 112A-N, 114A-N, 116A-N entering or leaving the perimeter 110A-N. Therefore, any change in the location of the one or more components 112A-N, 114A-N, 116A-N can be easily identified. At step 403, the real-time location of the one or more components 112A-N, 114A-N, 116A-N is determined in the geographical area based on the virtual perimeter 110A-N. In an embodiment, each of the one or more components 112A-N, 114A-N, 116A-N is associated with a sensor. The sensor may be, for example, a transponder which is configured to detect locational information associated with the one or more components 112A-N, 114A-N, 116A-N.

At step 403, one or more data associated with the sensors corresponding to the one or more components 112A-N, 114A-N, 116A-N present in the at least one virtual perimeter 110A-N in the geographical area is determined. The one or more data may be, for example, the locational information associated with the one or more components 112A-N, 114A-N, 116A-N. At step 404, the real-time location associated with the one or more components 112A-N, 114A-N, 116A-N is determined based on the virtual perimeter 110A-N and the locational information obtained from the sensors corresponding to the components 112A-N, 114A-N, 116A-N. Advantageously, the determination of the real-time location of the one or more components 112A-N, 114A-N, 116A-N enables effective configuration of the product manufacturing process.

FIG 5 is a flowchart illustrating a method 500 of generating the at least one virtual perimeter 110A-N in the at least one portion of the geographical area. At step 501, a presence of at least one physical perimeter in the geographical area is determined. In an embodiment, the manufacturing facility 108 may deploy one or more physical perimeters in at least one portion of the geographical area associated with the manufacturing facility 108. The physical perimeters may employ one or more sensors to track any component entering or leaving a boundary of the physical perimeter. Therefore, any movement associated with the one or more components 112A-N, 114A-N, 116A-N can be tracked within the manufacturing facility 108. At step 502, the at least one physical perimeter is mapped on the representation of the geographical area. The mapping may be performed based on a physical location of the physical perimeter in the geographical area. Therefore, at step 503, the virtual perimeter 110A-N may be generated in the representation of the geographical area based on the physical location of the physical perimeter.

In an embodiment, the virtual perimeter 110A-N may include nested virtual perimeters 130 in the geographical area. For example, a secondary virtual perimeter 130 may be present within a primary virtual perimeter 110A. The nested virtual perimeters 130 enable further locational classification of the components 112A-N, 114A-N, 116A-N in a given geographical area. In a further embodiment, the virtual perimeter 110A-n may be activated/deactivated by the user of the manufacturing facility 108 on a need basis. Additionally, the virtual perimeters 110A-N may be color coded. Color coding of the virtual perimeters 110A-N enables differentiation of the geographical area based on a type of the components 112A-N, 114A-N, 116A-N present in the geographical area. In a further embodiment, the database 104 may include information associated with a plurality of virtual perimeters 110A-N in the geographical area. Such information may be retrieved easily on need basis.

FIG 6 is a flowchart illustrating a method 600 of identifying the one or more components 112A-N, 114A-N, 116A-N logically required to manufacture the product. At step 601, a plurality of components 112A-N, 114A-N, 116A-N associated with the product to be manufactured. The plurality of the components 112A-N, 114A-N, 116A-N may logically form a part of the product to be manufactured. At step 602, a logic associated with the manufacturing of the product is determined. The logic may be, for example, the stage at which the manufacturing process is in real-time. Based on the stage of the manufacturing process, the one or more components 112A-N, 114A-N, 116A-N may be sourced from the geographical area/ one of the virtual perimeters 110A-N. Therefore, not all components required at every stage of the manufacturing process may be sourced at a given point in time. In a further embodiment, the logic may also be based on the information associated with the one or more components 112A-N, 114A-N, 116A-N, i.e. the make of the components 112A-N, 114A-N, 116A-N, the time stamp associated with the components 112A-N, 114A-N, 116A-N and/or the health status of the components 112A-N, 114A-N, 116A-N. At step 603, the one or more components 112A-N, 114A-N, 116A-N are identified based on the logic.

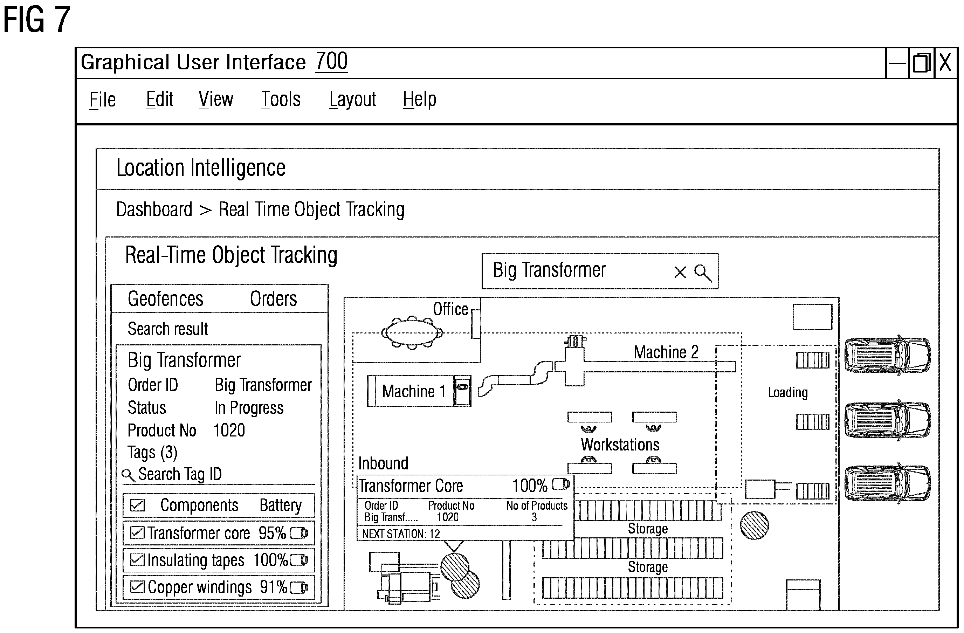

FIG 7 is a graphical user interface (GUI) 700 depicting real-time location tracking of the components, according to an embodiment of the present invention. The graphical user interface 700 depicts a representation of a geographical location in the manufacturing facility 108 where the one or more components 112A-N, 114A-N, 116A-N are located. In the embodiment, the product to be manufactured is a Big Transformer. The GUI further depicts the one or more components 112A-N, 114A-N, 116A-N logically required for the manufacture of the Big Transformer, i.e., Transformer core, insulating tapes and copper windings. The representation of the geographical area includes a plurality of the virtual perimeters 110A-N depicting different portions of the geographical area. Further, the GUI includes information associated with the location of the one or more components 112A-N, 114A-N, 116A-N in the geographical area. The locational information associated with the one or more components 112A-N, 114A-N, 116A-N is identified based on the one or more sensors corresponding to the one or more components 112A-N, 114A-N, 116A-N.

The advantage of the invention described above is that the manufacturing process associated with the product can be configured efficiently. Additionally, the virtual perimeters enable accurate identification of the locational information associated with the components required for the manufacture of the product. Further, the components can be logically sourced to the product assembly line thereby avoiding bottleneck in the manufacturing process. The information associated with the components also enable effective tailor making of the product based on the needs of the customer. The virtual perimeters enable effective monitoring of movement of components within the manufacturing facility. Therefore, any adjustment required in a path to be followed to the assembly line for manufacturing may be improved. Furthermore, presence of human resources in the manufacturing facility may be performed with greater accuracy.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### List of reference numbers

- 100: Client-server architecture/System
- 101: Apparatus
- 102: Configuration module
- 104: Database
- 106: Network interface
- 108: Manufacturing facility
- 110A-N: Physical perimeters/virtual perimeters
- 112A-N: Components
- 114A-N: Components
- 116A-N: Components
- 120: User device
- 130: Nested perimeter
- 201: Edge gateway
- 202: Network
- 210: Processing unit
- 212: Memory
- 213: Storage unit
- 214: Input unit
- 215: Output unit
- 216: Bus
- 700: Graphical user interface

## Claims

1. A method (300) of dynamically configuring a product manufacturing process, the method (300) comprising:
identifying a type of the product to be manufactured;
determining one or more components (112A-N, 114A-N, 116A-N) logically required to manufacture the product based on the type of the product to be manufactured;
determining a real-time location of the one or more components (112A-N, 114A-N, 116A-N) logically required to manufacture the product in a geographical area; and
configuring the product manufacturing process based on the real-time location of the one or more components (112A-N, 114A-N, 116A-N).

2. The method (300) according to claim 1, wherein the one or more components (112A-N, 114A-N, 116A-N) required to manufacture the product are located in the geographical area, wherein the geographical area is associated with at least one of a manufacturing facility (108), an industrial set-up, a warehouse, a technical installation, and a commercial facility.

3. The method (300) according to claim 1, wherein determining the real-time location of the one or more components (112A-N, 114A-N, 116A-N) comprises:
obtaining a representation of the geographical area;
generating at least one virtual perimeter (110A-N) on at least one portion of the representation of the geographical area; and
determining the real-time location of the one or more components (112A-N, 114A-N, 116A-N) in the geographical area based on the virtual perimeter (110A-N),
wherein the one or more components (112A-N, 114A-N, 116A-N) are associated with a sensor,
wherein the sensor is configured to provide real-time location information associated with the one or more components (112A-N, 114A-N, 116A-N).

4. The method (300) according to claim 1, further comprising:
determining an information associated with each of the one or more components (112A-N, 114A-N, 116A-N), wherein the information relates to a health status of the one or more components (112A-N, 114A-N, 116A-N), a time stamp associated with the one or more components, (112A-N, 114A-N, 116A-N) and/or a make of one or more components (112A-N, 114A-N, 116A-N); and
providing the information associated with each of the one or more components (112A-N, 114A-N, 116A-N) on a user device (120).

5. The method (300) according to claim 3, wherein generating the at least one virtual perimeter (110A-N) in the at least one portion of the geographical area comprises:
determining a presence of at least one physical perimeter in the geographical area;
mapping the at least one physical perimeter on the representation of the geographical area; and
generating the virtual perimeter (110A-N) on the representation of the geographical area based on the mapping.

6. The method (300) according to claim 3, further comprising determining one or more data associated with the sensors corresponding to the one or more components (112A-N, 114A-N, 116A-N) present in the at least one virtual perimeter (110A-N) in the geographical area.

7. The method (300) according to claim 1, wherein identifying the one or more components (112A-N, 114A-N, 116AN) logically required to manufacture the product comprises:
determining a plurality of components associated with the product to be manufactured, wherein the plurality of components logically form a part of the product to be manufactured;
determining a logic associated with the manufacturing of the product; and
identifying the one or more components (112A-N, 114A-N, 116A-N) from the plurality of components based on the logic.

8. A device(101) for dynamically configuring a product manufacturing process, the device (101) comprising:
one or more processing units (210); and
a memory (212) coupled to the one or more processing units (210), the memory (212) comprising a configuration module (102) configured to perform the method steps according to any of claims 1 to 7.

9. A system (100) for dynamically configuring a product manufacturing process, the system (100) comprising:
one or more servers (101); and
one or more sensors communicatively coupled to the one or more servers (101), wherein the one or more sensors is configured to capture a location information associated with one or more components present in a geographical area; and
wherein the one or more servers (101) comprises computer readable instructions, which when executed by the one or more servers (101) cause the one or more servers (101) to perform the method according to claims 1 to 7.

10. A computer program product comprising machine readable instructions, that when executed by a processing unit (210), cause the processing unit (210) to perform a method according to any of claims 1 to 7.

11. A computer readable medium on which program code sections of a computer program are saved, the program code sections being loadable into and/or executable in a system (100) to make the system (100) execute the method of any one of the claims 1 to 7 when the program code sections are executed in the system (100).
